# EUROPEAN PATENT SPECIFICATION

(11) **EP 1 583 877 B1**
(45) Date of publication and mention of the grant of the patent: **04.03.2009**
(21) Application number: 04701271.1
(22) Date of filing: 09.01.2004
(51) Int. Cl.: E04G 21/04

(54) **REINFORCED COMPOSITE BOOM PIPE WITH BONDED SLEEVES**
VERSTÄRKTESVERBUNDAUSLEGERROHR MIT VERBUNDENEN BUCHSEN
TUYAU DE FLECHE COMPOSITE RENFORCE A MANCHONS COLLES

(30) Priority: 15.01.2003 US 440231 P; 07.01.2004 US 752916
(43) Date of publication of application: 12.10.2005
(73) Proprietor: Putzmeister America, Inc., Sturtevant, WI 53177 (US)
(72) Inventor: MAYER, Martin, G., Racine, WI 53406 (US); WILLIG, John, T., Cincinnati, OH 45208 (US)
(74) Representative: Hackett, Sean James
(86) International application number: PCT/US2004/000623
(87) International publication number: WO 2004/065723

(56) References cited:
- DE-A- 3 910 796
- DE-A- 19 522 540
- US-A- 3 794 359
- US-A- 4 130 134
- US-A- 5 044 670
- US-B1- 6 467 812

## Description

### BACKGROUND OF THE INVENTION

The present invention generally relates to a concrete pumping unit having a hinged structure, hereafter referred to as a boom arm, including a multi-section pipe, hereafter referred to as the boom pipe, for delivering pumped concrete to a location remote from the pumping unit. More specifically, the present invention relates to the use and manufacture of reinforced urethane pipe sections for use with a mobile concrete pumping vehicle. The reinforced urethane (also referred to as composite urethane) pipe reduces the overall weight of the boom arm while providing the required strength and durability for the delivery of concrete or other materials.

Presently, mobile concrete pumping vehicles and stationary concrete pumping units are available that include a multi-section boom arm that is folded into a compact condition during transport and storage. Once the pumping unit is positioned at the work site, the folded boom arm is extended to supply concrete to a remote location. Typically, the boom arm includes a steel boom pipe made up of multiple sections that are supported by the boom arm such that concrete can be supplied to a remote location on the work site. Each of the pipe sections is currently fabricated from steel to provide the required durability and strength to withstand the internal pressure of the concrete being pumped by the unit.

Currently, some mobile concrete pumping vehicles and mast-mounted pumping units include a boom arm that can extend up to 53,34 m (175 feet) from a base. When the boom arm is in its extended position, each section of the boom arm must be able to support not only the weight of the boom arm, but also the weight of the individual pipe sections and the concrete contained within each pipe section. Thus, the overall weight of the boom arm during the delivery of concrete is a limitation as to how long the boom arm can be constructed without adding significant reinforcements to the boom arm to support the total weight of the boom arm including the concrete being pumped.

One contemplated solution for reducing the overall weight of the boom arm is to replace the steel boom pipe sections with a composite material, such as plastic. Although the plastic pipe sections would reduce the overall weight of the boom arm, few plastics are strong enough to prevent bursting due to the pumping pressure of approximately 8,3 Mpa (1200 psi) within each of the pipe sections. Therefore, although the idea of replacing the steel pipe with a lighter weight, high wear resistant alternative appears desirable, currently no pipe exists that provides the desired weight savings while maintaining the required strength and wearability associated with high pressure pumping operations, such as with concrete.

Presently, concrete pumping units typically include multiple boom pipe sections that are used to deliver pumped concrete from its input receptacle, hereafter referred to as the hopper, to the tip of its boom arm at a remote location on the work site. Each of the pipe sections, both on the chassis deck and the retractable boom, are currently fabricated from steel with grooved steel sleeves welded on at both ends. The current steel pipe sections are connected with a steel or aluminum clamp that uses the grooves on the steel sleeves, along with a rubber seal ring, to form a sealed connection that can withstand the internal pressures of the material being pumped.

Therefore, a need exists for both a mobile concrete pumping vehicle and mast-mounted pumping unit that utilize a supply of pipe having a reduced weight that is strong enough to withstand the pressures of pumping concrete. Further, a need exists for a composite pipe section that can be utilized with a mobile pumping vehicle that results in a significant weight reduction to the supply pipe while providing the required durability and strength. Further, a need exists for a boom pipe section that includes a grooved sleeve on each end such that the pipe sections can be connected in a similar manner to currently available pipe sections.

DE 195,22,540 and US 6,467,812 disclose a pipe section for concrete that utilises end couplings welded to the pipe section. US 4,130,134 discloses a pumping unit with the features of the preamble of claim 1.

### SUMMERY OF THE INVENTION

According to the present invention there is provided a pumping unit as defined in claim 1 below.

The present invention relates to a concrete pumping unit that utilizes a boom pipe formed from composite pipe sections to deliver pumped concrete to the end of a hinged boom arm. Additionally, the present invention is directed to a coupling design that enables the composite urethane boom pipe sections to be attached to each other.

The concrete pumping unit, such as a mobile pumping device, includes a boom arm having a plurality of boom sections such that the boom arm can be extended from a folded position to an extended position to provide a supply of concrete at a desired remote location. The boom arm sections each support one or more sections of a boom pipe such that pumped concrete can be directed to the end of the boom arm. Presently, each of the boom pipe sections is formed from steel. In accordance with the present invention, the steel pipe sections are each replaced by a lightweight, durable reinforced composite urethane pipe section.

Each of the composite urethane pipe sections includes a reinforcing outer layer and a wear resistant inner layer. The reinforcing outer layer provides the required hoop or tensile strength to withstand the pressure of concrete being pumped. The wear resistant inner surface provides the required durability for contact with the very abrasive concrete material being pumped.

In the preferred embodiment of the invention, the reinforcing.layer is formed from a braided or woven sock of carbon fiber material for maximum strength and minimal weight. Other high strength fibers, such as, but not limited to, "S" glass or aramid fiber could also be used. The wear resistant inner layer is preferably formed from urethane having a durometer hardness rating of between 90-A and 95-A. However, other hardness ratings are contemplated depending upon the type of material being pumped.

In accordance with the present invention, each of the reinforced composite pipe sections utilizing a braided carbon fiber sock and urethane weighs approximately 25% of a similar steel pipe. Thus, the carbon fiber reinforced urethane pipe sections have a weight of approximately 2.6 pounds per foot, as compared to approximately 10.2 pounds per foot for a steel pipe. Thus, a mobile pumping vehicle utilizing the composite pipe sections of the present invention and having a boom length of 61 m (200 feet) can realize a reduction in boom weight of about 690 kg.

The current steel boom pipe sections are connected with what is commercially called a Victaulic® clamp. A Victaulic® groove connection is welded to each end section of steel boom pipe and external Victaulic® clamps are used to connect each pipe. With the composite urethane boom pipe, a need exist for a method to attach a Victaulic® groove. In accordance with this current invention a metal sleeve with a Victaulic® groove is manufactured and secondarily bonded to the urethane boom pipe using a high strength epoxy. This enables the urethane composite boom pipe to be interchangeable with the current steel boom pipe.

Various other features, objects and advantages of the invention will be made apparent from the following description taken together with the drawings.

### BRIEF DESCRIPTION OF THE DRAWINGS

The drawings illustrate the best mode presently contemplated of carrying out the invention.

In the drawings:
Fig. 1 is a side view of a mobile concrete pumping vehicle of the present invention that includes reinforced composite pipe sections on the hinged boom arm;
Fig. 2 is a back perspective view of the mobile concrete pumping vehicle illustrating the incorporation of the reinforced composite pipe;
Figs. 3a and 3b illustrate the mobile concrete pumping vehicle with the boom arm in intermediate positions between a retracted position and a fully extended position;
Fig. 4 is a section view of the reinforced composite pipe section prior to application of the end coupling thereto;
Fig. 5 is a side view of the reinforced composite pipe section of the present invention;
Fig. 6 is a section view taken along line 6-6 of Fig. 5 illustrating the bonded connection of the end coupling to the pipe section.

### DETAILED DESCRIPTION OF THE INVENTION

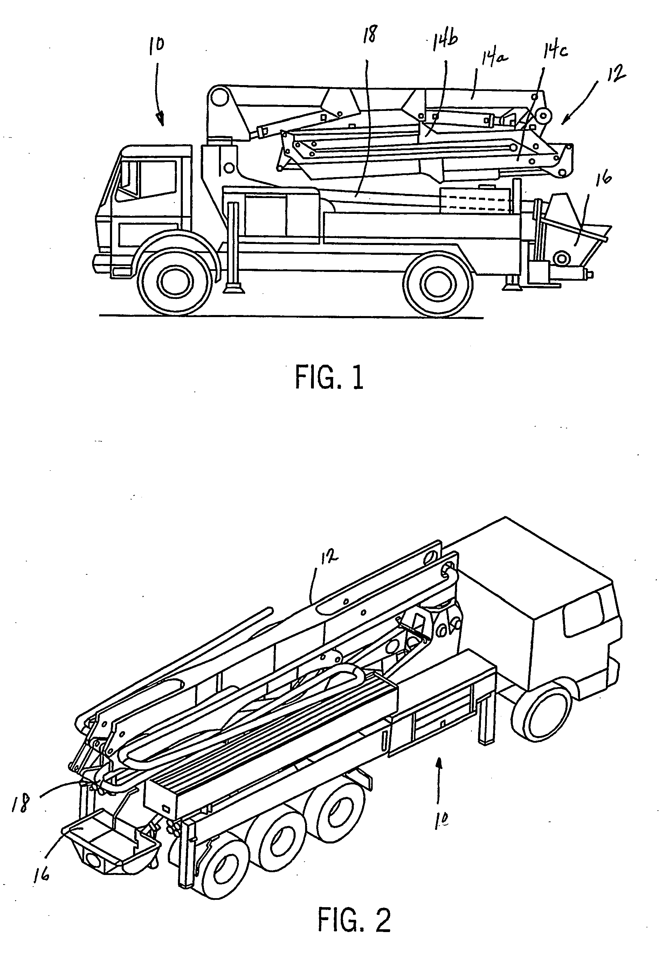

Fig. 1 illustrates a mobile concrete pumping vehicle 10 that includes an extendible boom arm 12 having independent sections 14a-14c that can be unfolded and extended. Each of the sections 14a-14c supports a portion or portions of a composite boom pipe of the present invention to provide a path for pumped concrete to flow from a storage hopper 16 to the outermost tip of the boom arm.

Referring now to Fig. 2, the mobile concrete pumping vehicle 10 includes a plurality of individual pipe sections 18 that each extend along the length of each section of the extendible boom arm 12 to provide the path for concrete from the hopper 16. The individual pipe sections 18 are joined to each other by a movable joint such that the boom arm 12 can be extended without interrupting the flow path for the concrete through the joined pipe sections 18.

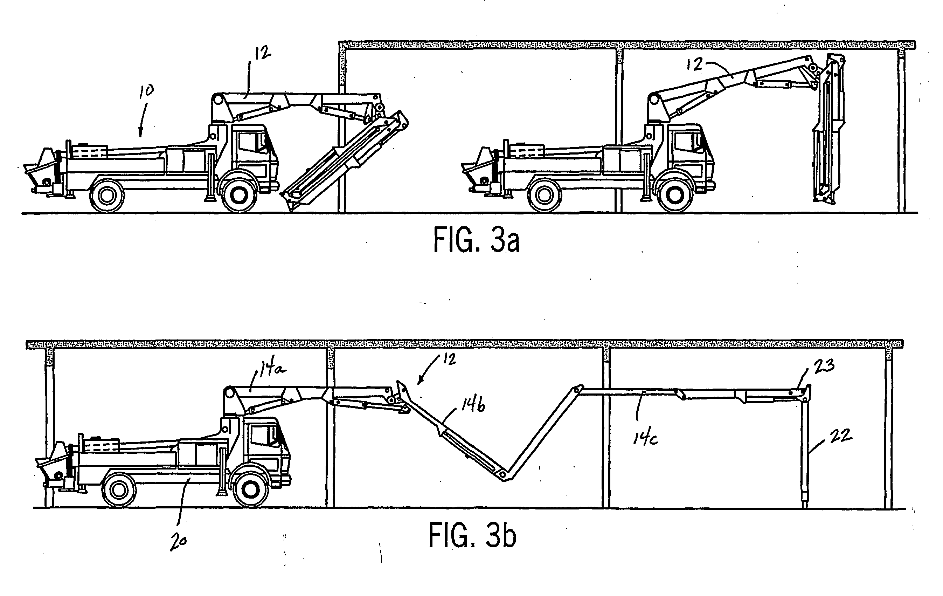

Referring now to Fig. 3a, thereshown is the boom arm 12 beginning to extend from the body 20 of the vehicle 12. As illustrated in Fig. 3b, the boom arm 12 can be extended a significant distance from the body 20 to provide a flow of concrete out of a concrete delivery hose 22 at the outer end 23 of the boom arm 12 to place concrete at the desired location. Currently, mobile concrete pumping vehicles have boom arms 12 that can extend up to 53 m (175 feet) from the truck body 20 to supply concrete to the desired location.

As can be understood in Fig. 3b, each of the boom sections 14a-14c must be constructed of a material strong enough to support not only the weight of the boom arm 12, but also the weight of the boom pipe sections and the weight of the concrete being delivered through the pipe sections. The weight on the boom arm 12 creates a significant force along the length of the boom arm sections 14a-14c, thus limiting the length of the boom per cross-sectional design and material type. Eventually the total weight of pipes, concrete, and arms reaches the point that a longer boom can only be achieved with a cross-section or material that is prohibitive due to cost, availability, and/or fabrication restraints. In addition, to avoid an unstable condition, the mobile concrete pumping vehicle 10 will need to weigh more (via added counterweights) which is undesirable in transportation.

Although the present invention is shown in the figures as being particularly desirable for use with a mobile concrete pumping vehicle, it should be understood that the composite boom pipe is also particularly desirable when used with other types of concrete pumping units. For example, concrete pumping units are currently available that include an extendable boom arm where the entire pumping unit is mounted on top of an extended mast. The boom arm is extendable from a base such that concrete can be delivered to a remote location at a work site. A mast-mounted concrete pumping unit is particularly useful in constructing multiple floor buildings. The advantages of the composite urethane boom pipe sections are equally applicable to this type of pumping unit, since the composite urethane boom pipe sections reduce the overall weight of the boom arm which allows the length of the boom arm to be increased as compared to boom arms utilizing steel boom pipe sections.

Presently, each of the boom pipe sections 18 is formed from a metal material, such as steel, such that each section of pipe has a weight of approximately 12 pounds per foot. Thus, the supply pipe for a 53 m (175 foot) boom arm would have an overall weight of 953 kg empty. In accordance with the present invention, the boom pipe sections 18 of the mobile concrete pumping vehicle 10 are replaced with a reinforced composite urethane pipe sections having a significantly lower overall weight such that the weight of the boom arm 12 is significantly reduced as compared to the prior art.

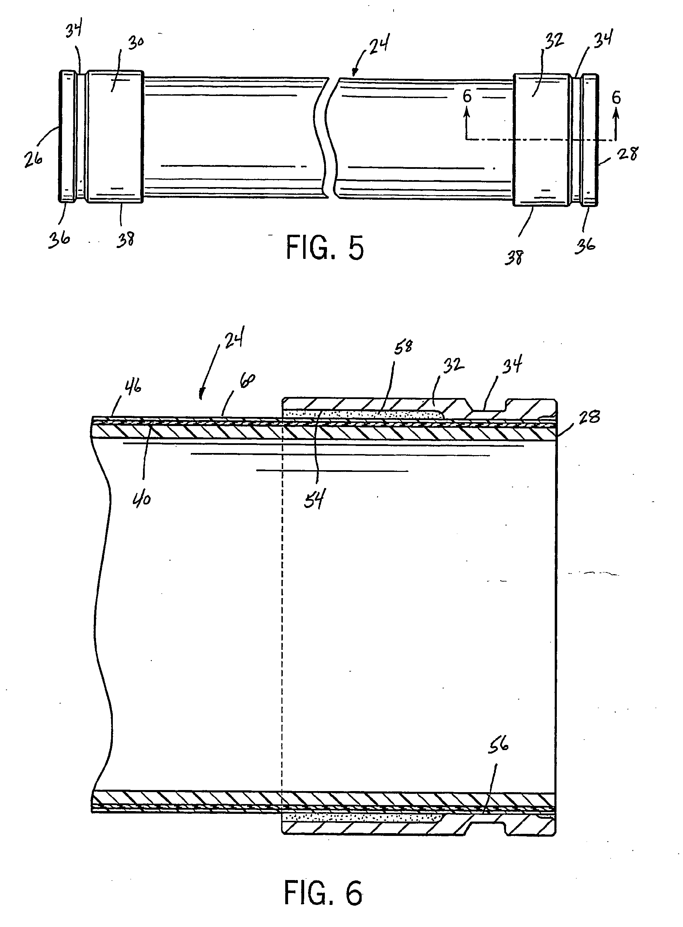

Referring first to Fig. 5, thereshown is a reinforced composite pipe section 24 that forms the basis of the present invention. The pipe section 24 extends from a first end 26 to a second end 28 to define the overall length of the pipe section 24. In the preferred embodiment of the invention, the length of the pipe section 24 is three meters, although other lengths of pipe are certainly contemplated as being within the scope of the present invention.

The pipe section 24 includes a first end coupling 30 and a second end coupling 32 that allow the pipe section 24 to be joined to others in a conventional manner. Each of the end couplings 30, 32 includes a recessed groove 34, commercially referred to as a Victaulic® groove, positioned between an outer lip 36 and an inner attachment flange 38. The configuration of each of the end couplings 30, 32 is conventional and currently utilized in mobile concrete pumping vehicles.

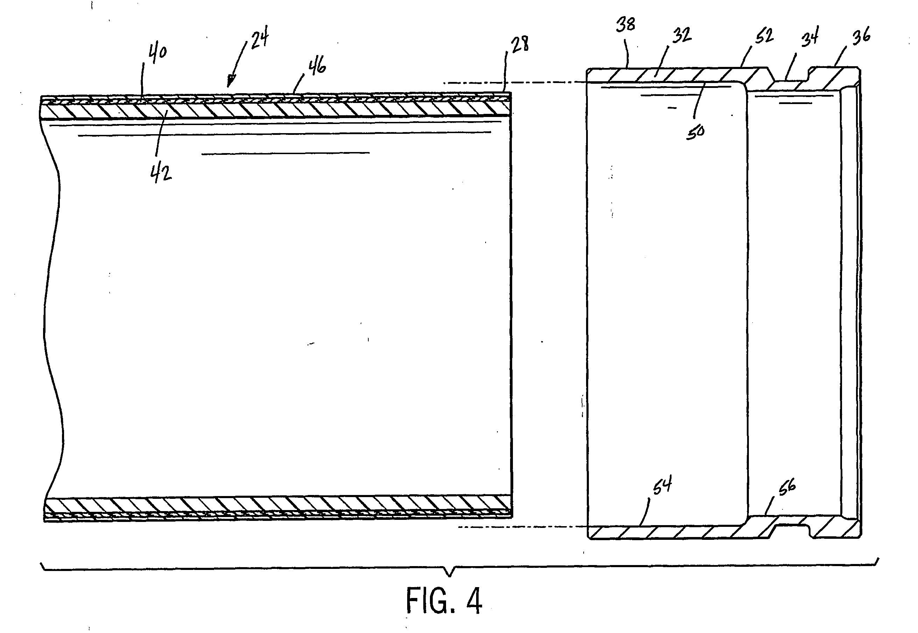

Referring now to Fig. 4, thereshown is a cross-section view of the reinforced pipe section 24 of the present invention. The reinforced pipe section 24 includes a reinforcing layer 40 and a wear resistant inner layer 42. In the preferred embodiment of the invention, the reinforcing layer 40 is a braided or woven sock.

The braided sock that forms the reinforcing layer 40 can be made from any type of fiber material, such as fiberglass, carbon fiber or a synthetic fiber such as Kevlar® or Vectran®. In the preferred embodiment of the invention, the braided sock is formed from a carbon fiber material due to its weight and strength characteristics. The braided sock provides for increased tensile strength for the reinforced pipe section 24 while providing for a low overall weight.

In the embodiment of the invention illustrated, the braided sock that forms the reinforcing layer 40 has an approximate thickness of 1/8 inches and is created using a cross-hatch pattern to provide support for radial expansion of the pipe. This type of pattern is selected since the pressure generated in a concrete boom pipe is extremely high and the cross-hatch pattern provides additional strength against radial rupture. For example, the pressure generated in a concrete boom pipe can be up to 8,3 Mpa (1200 psi). Since it is desirable for the pipe section to be designed to have a safety factor of two, the reinforced pipe section 24 should be able to withstand pressures approaching 16,6 Mpa (2400 psi). The reinforcing layer 40 provides the hoop and tensile strength required, while the wear layer 42 provides a high wear resistant inner surface for the flow of rough materials, such as concrete.

Referring back to Fig. 4, if a braided sock is used as the reinforcing layer 40, a stiffening layer 46 must be applied to the braided sock to stiffen the braided sock during the formation process to be described in greater detail below.

Referring back to Fig. 4, in the preferred embodiment of the invention illustrated, the wear layer 42 has a thickness of approximately 3/16 inches and is formed from a durable resin, such as urethane. The urethane wear layer 42 provides the required wear and abrasion resistance while providing low overall weight for the reinforced pipe section 24. Urethane, and other chemicals similar thereto, are available in a number of different hardnesses and chemistries. The actual formulation in hardness of the urethane wear layer 42 can be adapted depending upon the type of material flowing through the reinforced pipe section 24. In the preferred embodiment of the invention, urethane having a durometer hardness rating of 90-A to 95-A are selected. However, it is contemplated that for a non-concrete piping application, the urethane could have a durometer hardness rating as low as 70-A, or as high as 75-D.

Referring back to Fig. 4, the pipe section 24 includes an end coupling 32 positioned near the outer end 28. As can be seen in Fig. 5, a second end coupling 30 is also coupled to the pipe section 24 near the first end 26.

As illustrated in Fig. 4, the end coupling 32 is defined by an inner wall 50 and an outer wall 52. Preferably, the end coupling 32 is formed from a unitary section of steel in a conventional manner.

The end coupling 32 includes an inner, annular groove 54 thatis recessed from the inner wall 50. The annular groove 54 has a diameter slightly greater than the outer diameter of the pipe section 24 as illustrated. The inner most portion 56 of the inside wall 50 has a diameter that generally corresponds to the outer diameter of the pipe section 24 near the outer end 28.

As described previously, the end coupling 32 includes a recessed outer groove 34 positioned between an outer lip 36 and the inner attachment flange 38. The groove 34 is commonly referred to as Vitraulic® groove as is conventionally used in mobile concrete pumping vehicles.

Referring now to Fig. 6, the end coupling 32 is attached to the end 28 of the composite pipe section 24 by placing a supply of urethane adhesive 58 between the inner recessed groove 54 and the outer surface 60 of the stiffening layer 46 applied over the reinforcing layer 40. The high strength adhesive 58 provides a permanent bond between the end coupling 32 and the reinforced pipe section 24 such that the pipe section 24 can be used in a normal manner. For example, the pipe section 24 having the pair of end couplings 30, 32 can be connected to either other composite pipe sections 24, or conventional steel boom type sections, using what is commercially called a Vitraulic® clamp. As discussed, the Vitraulic® groove 34 allows the urethane composite boom pipe to be interchangeable with the current steel boom pipes presently available.

Referring back to Fig. 6, the inner surface 56 of the end coupling 32 contacts the outer surface 60 of the boom pipe section 24 to prevent the adhesive 58 from flowing out of the end 28. The surface 56 thus traps the adhesive 58 and allows the adhesive to set and permanently attach the end coupling 32 to the boom pipe section 24.

The reinforced composite pipe sections constructed in accordance with the present invention utilizing urethane and a braided fiber sock weigh roughly 25% of the currently used steel pipe sections. For example, the composite pipe section 24 has a weight of approximately 2.6 pounds per foot, while a similar steel pipe has a weight of approximately 10.2 pounds per foot. Thus, in a mobile concrete pumping vehicle having a boom arm with an extended length of 200 feet, the mobile concrete pumping vehicle would realize a reduction in boom force of approximately 152,000 ft. pounds. Due to the significant reduction in overall weight, lighter materials can be used to fabricate each boom section and the overall length of the boom arm can be increased. This provides a significant advantage currently not available.

Various alternatives and embodiments are contemplated as being within the scope of the following claims particularly pointing out and distinctly claiming the subject matter regarded as the invention.

## Claims

1. A pumping unit (10), comprising:
a multi-section moveable boom arm (12) having multiple boom pipe sections (14a - 14c), the boom arm (12) being extendable from a folded position to an extended position; and
a boom pipe supported by the boom arm (12) for directing the flow of material from a supply of material to an outer end (23) of the boom arm,
wherein the boom pipe is comprised of a plurality of joined boom pipe sections (24) each having a first end coupling (30) secured to a first end (26) of the pipe section and a second end coupling (32) secured to the second end (28) of the pipe section (24), **characterised in that**
each of the end couplings (30, 32) are secured to an outer surface (60) of the pipe section (24) by an adhesive (58) located between the end coupling (30, 32) and the outer surface (60) of the pipe section (24).

2. The pumping unit (10) of claim 1, wherein each end coupling (30, 32) includes an inner wall (50) in contact with the outer surface (60) of the pipe section (24), the inner wall (50) having an inner groove (54) positioned to receive the adhesive (58).

3. The pumping unit (10) of claim 2, wherein the contact between the inner wall (50) and the outer surface (60) traps the adhesive within the inner groove (54).

4. The pumping unit (10) of claim 1 wherein the pipe sections (24) are formed from a non-metallic composite material and the first and second end couplings (30, 32) are each formed from a metallic material.

5. The pumping unit (10) of claim 4 wherein each pipe section (24) has a tubular body including a reinforcing outer layer (40) and a wear resistant inner layer (42).

6. The pumping unit of claim 1 wherein the reinforcing outer layer (40) is formed from a braided fiber sleeve.

7. The pumping unit of claim 6 wherein the braided fiber sleeve is formed from carbon fiber.

8. The pumping unit of claim 6 wherein the wear resistant inner layer (42) is formed from urethane.

9. The pumping unit of claim 5 wherein the pipe sections (24) are each capable of sustaining an internal pressure of at least 8,3 Mpa (1200 psi).

10. The pumping unit (10) of any of the preceding claims further comprising:
a vehicle body; and
a material supply bin (16) mounted to the body for receiving a material to be pumped by the pumping unit (10);
wherein the boom arm is mounted to the vehicle body and extendible from a folded position to an extended position.

## Patentansprüche

1. Pumpenaggregat (10), umfassend:
einen mehrgliedrigen bewegbaren Auslegerarm (12) mit mehreren Auslegerarmsegmenten (14a-14c), wobei der Auslegerarm (12) ausfahrbar ist von einer gefalteten Position in eine ausgefahrene Position; und
ein Auslegerrohr, das vom Auslegerarm (12) getragen wird, um den Materialfluss von einer Materialversorgung zu einem äußeren Ende (23) des Auslegerarms zu leiten,
wobei der Auslegerarm aus einer Mehrzahl von zusammengefügten Auslegerrohrsegmenten (24) besteht, wobei jedes eine erste Endkupplung (30) hat, die an einem ersten Ende (26) des Rohrsegments befestigt ist und eine zweite Endkupplung (32), die am zweiten Ende (28) des Rohrsegments (24) befestigt ist, **dadurch gekennzeichnet, dass**
jede der Endkupplungen (30, 32) an einer äußeren Fläche (60) des Rohrsegments (24) durch einen zwischen der Endkupplung (30, 32) und der äußeren Fläche (60) des Rohrsegments (24) gelegenen Kleber (58) befestigt ist.

2. Pumpenaggregat (10) nach Anspruch 1, wobei jede Endkupplung (30, 32) eine innere Wand (50) in Kontakt mit der äußeren Fläche (60) des Rohrsegments (24) einschließt, wobei die innere Wand (50) eine innere Nut (54) hat, die positioniert ist, um den Kleber (58) aufzunehmen.

3. Pumpenaggregat (10) nach Anspruch 2, wobei der Kontakt zwischen der inneren Wand (50) und der äußeren Fläche (60) den Kleber in der inneren Nut (54) einschließt.

4. Pumpenaggregat (10) nach Anspruch 1, wobei die Rohrsegmente (24) aus einem nichtmetallischen Verbundstoff gebildet ist und die erste und zweite Endkupplung (30, 32) jede aus einem metallischen Material gebildet ist.

5. Pumpenaggregat (10) nach Anspruch 4, wobei jedes Rohrsegment (24) einen rohrförmigen Körper hat, der eine verstärkende äußere Schicht (40) und eine verschleißfeste innere Schicht (42) einschließt.

6. Pumpenaggregat (10) nach Anspruch 1, wobei die verstärkende äußere Schicht (40) aus einer Buchse aus geflochtenen Fasern gebildet ist.

7. Pumpenaggregat (10) nach Anspruch 6, wobei die Buchse aus geflochtenen Fasern aus Karbonfasem gebildet ist.

8. Pumpenaggregat (10) nach Anspruch 6, wobei die verschleißfeste innere Schicht (42) aus Urethan gebildet ist.

9. Pumpenaggregat (10) nach Anspruch 5, wobei jedes Rohrsegment (24) imstande ist einem inneren Druck von mindestens 8,3 Mpa (1200 psi) standzuhalten.

10. Pumpenaggregat (10) nach irgendeinem der vorhergehenden Ansprüche, ferner umfassend:
einen Fahrzeugkörper; und
einen Materialversorgungsbehälter (16), der am Körper befestigt ist, um ein Material zu empfangen, das vom Pumpenaggregat (10) gepumpt werden soll;
wobei der Auslegerarm am Fahrzeugkörper befestigt ist und von einer gefalteten Position in eine ausgefahrene Position ausfahrbar ist.

## Revendications

1. Unité de pompage (10) comprenant:
une flèche déplaçable multi-segment (12) ayant des segments de tuyau de flèche multiples (14a - 14c), la flèche (12) étant extensible d'une position repliée à une position d'extension ; et
un tuyau de flèche supporté par la flèche (12) pour diriger le flux de matériau d'une fourniture de matériau à une extrémité extérieure (23) de la flèche,
dans laquelle le tuyau de flèche est composé d'une pluralité de segments de tuyau de flèche joints (24), chacun ayant un premier couplage d'extrémité (30) fixé à une première extrémité (26) du segment de tuyau et un deuxième couplage d'extrémité (32) fixé à la deuxième extrémité (28) du segment de tuyau (24), **caractérisée en ce que**
chacun des couplages d'extrémité (30, 32) est fixé à une surface externe (60) du segment de tuyau (24) par un adhésif (58) situé entre le couplage d'extrémité (30, 32) et la surface externe (60) du segment de tuyau (24).

2. Unité de pompage (10) selon la revendication 1, dans laquelle chaque couplage d'extrémité (30, 32) inclut une paroi interne (50) en contact avec la surface externe (60) du segment de tuyau (24), la paroi interne (50) ayant une rainure interne (54) positionnée pour recevoir l'adhésif (58).

3. Unité de pompage (10) selon la revendication 2, dans laquelle le contact entre la paroi interne (50) et la surface externe (60) retient l'adhésif à l'intérieur de la rainure interne (54).

4. Unité de pompage (10) selon la revendication 1, dans laquelle les segments de tuyau (24) sont formés d'un matériau composite non métallique et les premier et deuxième couplages d'extrémité (30, 32) sont chacun formés d'un matériau métallique.

5. Unité de pompage (10) selon la revendication 4, dans laquelle chaque segment de tuyau (24) comporte un corps tubulaire incluant une couche externe de renforcement (40) et une couche interne résistant à l'usure (42).

6. Unité de pompage selon la revendication 1, dans laquelle la couche externe de renforcement (40) est formée à partir d'une gaine de fibre tressée.

7. Unité de pompage selon la revendication 6, dans laquelle la gaine de fibre tressée est formée de fibre de carbone.

8. Unité de pompage selon la revendication 6, dans laquelle la couche interne résistant à l'usure (42) est formée d'uréthane.

9. Unité de pompage selon la revendication 5, dans laquelle les segments de tuyau (24) sont chacun capables de supporter une pression interne d'au moins 8,3 Mpa (1200 psi).

10. Unité de pompage (10) selon l'une quelconque des revendications précédentes, comprenant en outre:
un corps de véhicule ; et
un bac d'alimentation en matériau (16) monté sur le corps pour recevoir un matériau devant être pompé par l'unité de pompage (10) ;
la flèche étant montée sur le corps de véhicule et extensible d'une position repliée à une position d'extension.
